# EUROPEAN PATENT APPLICATION

(11) **EP 2 578 437 A1**
(43) Date of publication of application: **10.04.2013**
(21) Application number: 11184381.9
(22) Date of filing: 07.10.2011
(51) Int. Cl.: B60L 11/18, B60L 8/00, B60K 1/00, B60K 16/00

(54) **Indoor transporter**

(71) Applicant: PB Techniek B.V., 2676 LT Maasdijk (NL)
(72) Inventor: Brabander, Koenraad Hendricus Maria, 3043 TT Rotterdam (NL)
(74) Representative: Grootscholten, Johannes A.M.

(57) **Abstract**

The present invention relates to an indoor transporter comprising a mobile frame (5), an electric drive (9) and a battery (8). Furthermore, the indoor transporter comprises a photovoltaic solar panel (12) connected to the battery (8).

## Description

The present invention relates to an indoor transporter. Indoor transporters to which the invention relates, are for instance carts which are mobile over a floor or runs over tubes inside a building in general, and a greenhouse in particular (though not exclusively).

Prior art transporters are known to comprise a mobile frame; an electric drive; and a battery.

These transporters may for instance be used in preferred greenhouses, where users can be transported along rows of plants to harvest crops or tend otherwise to the plants. Currently, in even the most modern greenhouses battery charged carts are used to do labor inside greenhouses. The carts are equipped with one or multiple full traction batteries of for instance 24 Volt. These batteries are charged at times when the carts are not being used, which is mostly during the night), so that the carts can be operated during working hours (mostly during the day). Charging the battery or batteries is in some known transporters performed with battery chargers, which are most often located at a central place of the working area. Alternatively the carts may be equipped with their own chargers. Regardless of the carts having their own battery charger, carts must be moved to a central battery charger or mains connection (of which there are understandable very few inside some buildings of interest in relation to the present invention, such as in particular, though not exclusively greenhouses), when the battery or batteries run low.

In addition to costs for electric power to charge the battery or batteries, down time for charging the battery or batteries results in considerable costs in terms of labor time, as workers stand idle awaiting the battery to be charged again. When a user is ready for the day, or when his cart runs empty, he has to move a previously used cart to the battery charging station or the mains connection, and take a new cart (if available, where mostly no "spare" carts are available, because the costs to maintain an essentially redundant transporter) or wait until the battery or batteries are charged again.

The present invention is directed at obviating or at the very least decreasing the above mentioned and/or other drawbacks and/or disadvantages of the prior art indoor transporters, in that the indoor transporters according to the present invention comprise a photovoltaic solar panel connected to the battery.

In particular in relation to indoor transporters to be employed in greenhouses, amounts of solar energy available to generate electrical energy are sufficient to keep transporters in use for long periods of time. For other intended fields of use, it may already suffice if a transporter can at times be parked in the vicinity of a window or under a glass ceiling or even temporarily in or outside a structure such as an atrium, to sufficiently charge the battery or batteries for prolonged use on solar energy, or at least to decrease the need for charging on mains power supplies.

It is noted here that the present invention should be assessed not on the basis of hind-sight, but that the present invention breaks with persistent prejudice. While for a very long time electrical indoor transporters have been known, no example of a solar powered version thereof, as according to the invention, is known to the inventors of the present indoor transporter. The prejudice may have resulted from a desire to limit numbers of components, or simply that it was not considered feasible to use solar power for indoor transporters. Regardless of any source of any such prejudice, breaking therewith is a clear indicator of a true invention.

Within the framework of the present invention as outlined above, preferred embodiments may exhibit many different features, which will be apparent from the following description and/or be defined in dependent appended claims.

In an embodiment, the indoor transporter may exhibit the feature that the solar panel is connected to the battery via a converter. Thus the output voltage of the solar panel can be made to correspond with the charging voltage of the battery.

In an embodiment, the indoor transporter may exhibit the feature of further comprising a mains connector and battery charger. If the battery runs low or even empty as a consequence of a lack of sufficient solar energy, traditional charging on a mains power supply is still possible.

In an embodiment, the indoor transporter may exhibit the feature of a platform for a user to stand or sit on, where the solar panel is arranged overhead with respect to the platform. In this embodiment, the solar panel is kept out of the way of the user(s) on the platform, but may surprisingly even form a parasol-like structure to shield the user(s) from the hot sun, if and/or when it is shining. It is noted that especially high up in greenhouses, modern examples of which may be as high as 5 - 8 meters, the heat accumulation underneath the glass roof of the greenhouse is staggering. The feature that the solar panel forms a shield from the sun, while simultaneously generating the required necessary electrical power for operation of the transporter, strongly contributes to the overall usability of the transporter according to this embodiment of the invention.

In an embodiment, the indoor transporter may exhibit the feature that a lift is arranged between the mobile frame and the platform. Thus the working height of the platform and of the user(s) thereon may be adjusted to prevent reaching or bending down, which is in modern greenhouses of up to 5 - 8 meters and plants growing to the same heights simply impossible.

In an embodiment, the indoor transporter may exhibit the feature that the solar panel is connected to a stand extending upward from any one of the mobile frame and the platform. In an embodiment where the stand is on the frame, and the platform is in height adjustable, the height of the stand is preferably chosen such that the user(s) don't bump their heads against the solar panel, even with the platform in the highest position thereof. Consequently, the solar panel will then practically always also be above the plants to catch as much sunlight as possible without blocking of sunlight by the plants. In the alternative, the solar panel could be on the platform, and consequently be lowered below the tops of the plants, with a height adjustable platform, but a minimum working height between the platform and the solar panel will then be more certainly provided. Moreover, the stand of the solar panel can then be made shorter and consequently also somewhat less robust, thus saving on costs of the stand.

In an embodiment, the indoor transporter may exhibit the feature that the mobile frame comprises a support, such as at least three wheels defining a stable base area, and the stand is arranged to extend upward to position the platform above this base area. Thus stability of the indoor transporter as a whole is ensured. In such an embodiment the indoor transporter may further exhibit the feature that the stand, the mobile frame and the solar panel are positioned relative to one another such, that the solar panel is arranged above the stable base area, to serve the same purpose.

In an embodiment with at least a platform, the further feature may be embodied that a distance between the platform and the solar panel at least corresponds with an average length of users, such as at least 2 meters, and more preferably at least 2.2 meters. Thereby the user(s) is/are protected from injury.

In an embodiment, the indoor transporter may exhibit the feature that the solar panel is pivotably arranged in at least one orientation. This can contribute to orienting the solar panel maximally towards the sun. The indoor transporter may even comprise a sun tracking system to automatically adjust the pivot orientation of the solar panel, depending on the changing position of the sun during the day and passing through seasons. Likewise the pivot orientation may be adjusted by a user to obtain maximum protection from the sun, using the solar panel as a parasol.

In an embodiment, the indoor transporter may exhibit the feature that the solar panel is connected directly or indirectly to the mobile frame in at least one position around a circumference thereof. With a single connection, the carrying structure, such as a stand, may be kept simple. Moreover, with a single connection the pivotable orientation of the solar panel may also comprise adjustment in a plane perpendicular to the solar panel and through the connection, thus increasing the options for adjusting the solar panel even further. In a configuration having more than one connection, stability of the assembly may be expected to increase. In such an embodiment, the position may further be variable. Thus the solar panel can be moved or shifted along for instance the stand, thus further increasing the versatility of use of the present invention.

In an embodiment, the indoor transporter may exhibit the feature that the solar panel is designed to switch of specific cells, on which a shadow is cast, and to allow other cells to continue to function. Especially in an indoor environment, even in greenhouses, there's a distinct possibility shadows will be cast over the solar panel, for instance by beams and other structural components of greenhouses. When this happens, conventional solar panels tend to be designed (for unknown reasons) such, that the entire solar panel is put out of action. In contrast, the solar panel of the indoor transporter according to the present invention is designed to keep functioning on the basis of the cells thereof over which no shadow is cast.

The invention will be further clarified below, referring to an embodiment shown in the appended drawing, to which the present invention is by no means limited since limitation of the invention is a matter of the appended claims. In the appended drawing:
Figure 1 shows a front view of an indoor transporter according to the present invention in use; and
Figure 2 shows a side view of the indoor transporter of Figure 1 along the arrow II in Figure 1, and additionally schematically further components of the indoor transporter.

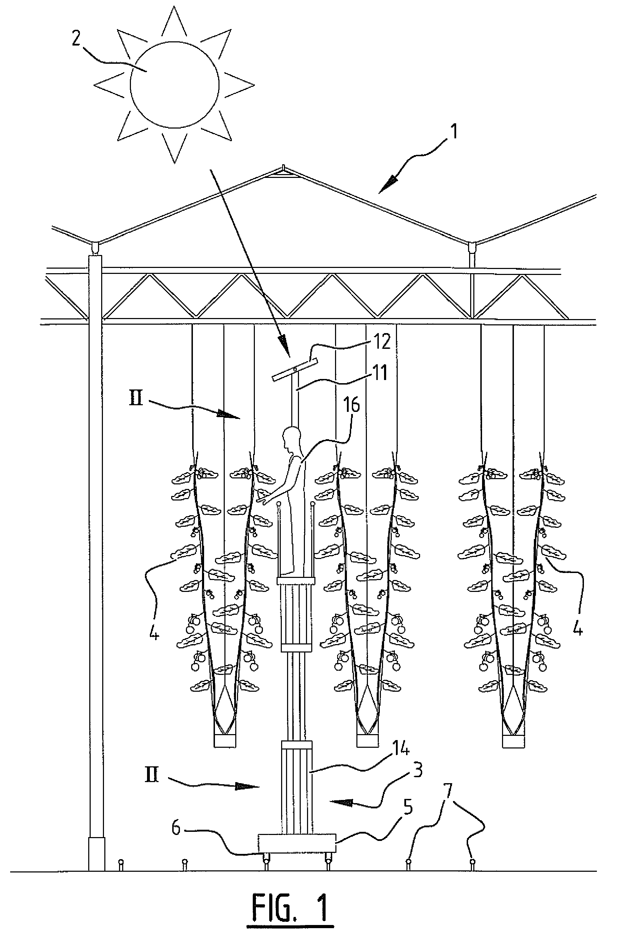

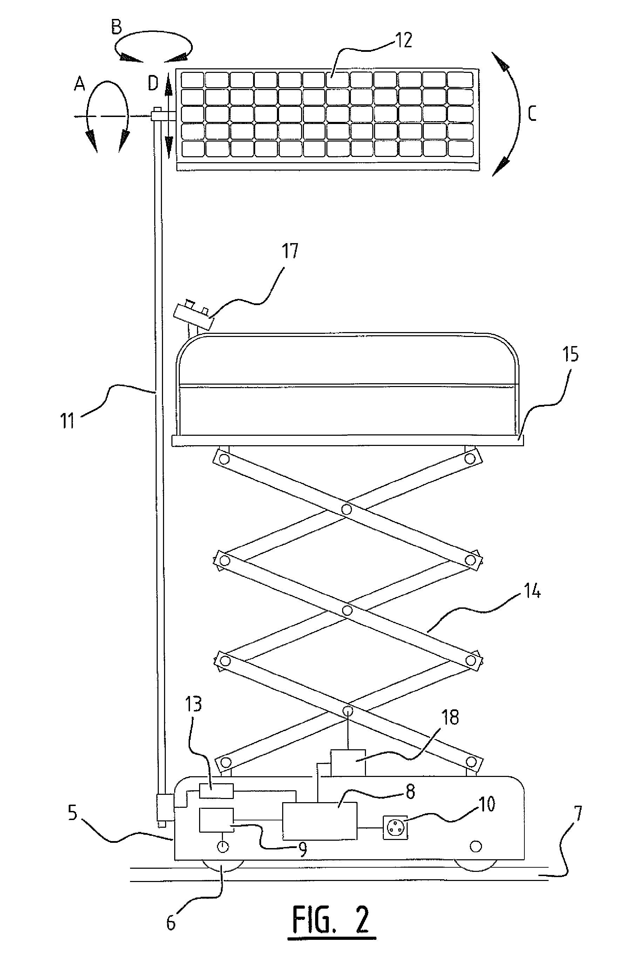

In figure 1 a greenhouse 1 is shown, with the sun 2 above. In the greenhouse 1 a mobile cart 3 as an embodiment of an indoor transporter is employed to manually harvest crops from or care for plants 4. The cart 3 comprises a mobile frame 5, running on wheels 6 over tubes 7 arranged in the greenhouse 1. The mobile frame 5 accommodates, as shown schematically in Figure 2, a battery 8, a motor 9 forming an electrical drive which acts on at least one of the wheels 6, and a mains power socket 10 for (additional) charging of the battery 8, as described in more detail below. The motor 9 for driving the cart 3 over the tubes 7 obtains electrical power from the battery 8.

The cart 3 further comprises a pole 11 forming a stand, which extends upwards from the mobile frame 5. At the top of the pole 11 a solar panel 12 is arranged. The solar panel 12 is connected to the battery 8 via a converter 13, for at least near to continuous charging of the battery 8 during use of the cart 3. The power socket is provided to allow for additional charging, if the battery runs low or empty, for instance when the cart 3 is used at night or when light conditions are very poor in the day time.

A lift 14 is arranged on the mobile frame 5, with at the top of the lift 14 a platform 15 for a user 16 to sit or stand on. A control 17 is arranged on the platform 15 for the user 16 to operate the lift 14, which is - like the motor 9 - also powered from the battery 8.

In an alternative embodiment, the pole 11 could be arranged on the platform 15, to ensure at all times sufficient head room for the user 16 underneath the solar panel 12. Preferably, a space of at least two meters and more preferably of at least two meters twenty is always available between the solar panel 12 and the platform 15.

In the embodiment shown in figures 1 and 2 the pole 11 is on the mobile frame 5 and holds the solar panel sufficiently high above a maximum height of the platform 15 on the lift 14, to achieve the same goal of sufficient head room for the user 16.

The lift 14 may be powered using a combination 18 of an electric pump and hydraulic cylinder, where the combination 18 may also receive electrical energy from the battery 8.

The solar panel 12 is photovoltaic (PV) and generates electrical power by converting solar radiation into direct current electricity using semiconductors that exhibit the photovoltaic effect. Photovoltaic power generation employs solar panels composed of a number of solar cells containing a photovoltaic material. Materials presently used for photovoltaic cells include monocrystalline silicon, polycrystalline silicon, amorphous silicon, cadmium telluride, and copper indium gallium selenide/sulfide.

The solar panel 12 essentially has a dual function. It not only generates electrical energy for use by motor 9 or combination 18, but it also forms a sunroof for a user 16 on the cart 3. Previously, users 16 used to work in full sunlight on the platforms of the cart 3. The solar panel 12 can create shadow, and thus create a more labor friendly working place.

According to this embodiment of the invention, the solar panel 12 is mounted on the pole 11 and the pole is arranged to a side of the mobile frame 5. The weight of the solar panel is in this manner directly above a stable base formed by the wheels 6. As shown in figure 1, the pole 11 is attached centrally to the front (or rear) of the mobile frame 5. Thus the cart 3 is stable, also when operated at maximum platform height.

It is noted that a sub-assembly of a pole 11 and solar panel 12 may be provided separately to upgrade existing carts quite easily.

Because a lot of carts 3 are used inside vegetable greenhouses (under glass), where the crop can reach a height of five meters or more above the soil, the length of the pole 11 may be selected such that the solar panel 12 is always above the shadow of the plants in maximum sunlight, even when the cart 3 is used with the platform 15 at a low level (in vertical position). In this way, even when the work is done, the platform 15 is lowered to the soil and the user 16 steps of the carts, the solar panel 12 is still at the right height to catch sunlight from the sun 2, to be only slightly blocked by the glass roof of the greenhouse 1 and - if any - technical installations mounted at a higher level within the greenhouse 1.

The path of the sun 2 over a greenhouse 1 is different every season and is different depending on the location of the greenhouse in the world. For this reason the solar panel PB-PV is not only height adjustable, but can also be positioned in any wanted orientation on its pole 11, as indicated by arrows A, B, C and D in figure 2. Any suitable mechanical configuration to achieve at least on the degrees of freedom indicated by the arrows A, B, C and D is well within the normal competent reach of any skilled person. Thereby the solar panel may be oriented in the most favorable position in accordance with the path of the sun 2 over the greenhouse 1. The orientation of the solar panel may also be placed in the most favorable position to act as a parasol for a user 16 on the platform 15.

It is noted that the adjustment according to arrow D in Figure 2 relates to sliding the solar panel along the pole 11. The panel 12 is connected to the pole 11 at one point along the circumference thereof. Between the pole 11 and the solar panel 12 a shift mechanism may be provided to allow for this movement, whereby the position of engagement between the pole 11 and the solar panel along the circumference of the solar panel is made variable.

Further it is noted here that the indoor transporter exhibits the feature that the solar panel is designed to switch of specific cells, on which a shadow is cast, and to allow other cells to continue to function. Especially in an indoor environment, even in greenhouses, there's a distinct possibility shadows will be cast over the solar panel. However, this will often affect only a limited number of all the cells in the solar panel, in particular if such shadows are cast by for instance beams and other relative thin structural components of greenhouses. When a shadow is cast over a number of the cells of the solar panel, the solar panel of the indoor transporter according to the present invention is designed to keep functioning to generate electrical power on the basis of the cells thereof, over which no shadow is cast. Thus generation of electrical power may be reduced, but is continued to keep powering the battery or batteries and/or the motor, with self-evident advantages.

It will be immediately evident to the skilled reader, that many additional and alternative embodiments are possible which all fall within the scope of protection for the present invention as defined in the appended claims, unless such embodiments deviate from the general concept of the invention as best defined in the appended claims.

## Claims

1. An indoor transporter, comprising: a mobile frame; an electric drive; and a battery, further comprising a photovoltaic solar panel connected to the battery.

2. The indoor transporter of claim 1, wherein the solar panel is connected to the battery via a converter.

3. The indoor transporter of claim 1 or 2, further comprising a mains connector and battery charger.

4. The indoor transporter of any preceding claim, further comprising a platform for a user to stand or sit on, where the solar panel is arranged overhead with respect to the platform.

5. The indoor transporter of claim 4, wherein a lift is arranged between the mobile frame and the platform.

6. The indoor transporter of any preceding claim,
wherein the solar panel is connected to a stand extending upward from any one of the mobile frame and the platform.

7. The indoor transporter of claim 6, wherein the mobile frame comprises a support, such as at least three wheels defining a stable base area, and the stand is arranged to position the platform above this base area.

8. The indoor transporter of claim 7, wherein the stand, the mobile frame and the solar panel are positioned relative to one another such, that the solar panel is arranged above the stable base area.

9. The indoor transporter of any preceding claim 4 - 8, wherein a distance between the platform and the solar panel at least corresponds with an average length of users, such as at least 2 meters, and more preferably at least 2,2 meters.

10. The indoor transporter of any preceding claim,
wherein the solar panel is pivotably arranged in at least one orientation.

11. The indoor transporter of any preceding claim,
wherein the solar panel is connected directly or indirectly to the mobile frame in at least one position around a circumference thereof.

12. The indoor transporter of claim 11, wherein the position is variable.

13. The indoor transporter of any preceding claim,
wherein the solar panel is designed to switch of specific cells, on which a shadow is cast, and to allow other cells to continue to function.
